# EUROPEAN PATENT APPLICATION

(11) **EP 3 154 285 A1**
(43) Date of publication of application: **12.04.2017**
(21) Application number: 15002881.9
(22) Date of filing: 08.10.2015
(51) Int. Cl.: H04W 12/04, H04W 4/00

(54) **PERSONALISATION DATA MANAGEMENT FOR A SECURITY ELEMENT**

(71) Applicant: Giesecke & Devrient GmbH, 81677 München (DE)
(72) Inventor: Tea, Vui Huang, SE-12061 Stockholm (SE)

(57) **Abstract**

The invention concerns a method for incorporating personalization data (44) into a security element (40) of an additional end device (30). For this purpose personalization data (44) are supplied for the security element (40) to a first end device (20) by a personalization server (10). A communication connection is established between the first end device (20) and an additional end device (30), the additional end device (20) comprising the security element (40). Finally, the personalization data (44) are transferred from the first end device (20) to the additional end device (30). The personalization data (44), for transfer to the additional end device (30), are embedded into one or more standardized application data object(s).

## Description

The present invention concerns a method for incorporating personalization data into a security element of a mobile end device. Subscription data defining a subscription in the security element of the mobile end device with reference to a mobile radio network can comprise the aforementioned personalization data as a core component. Thus, the present invention also generally concerns a method for subscription management.

Before a mobile end device, for example a smartphone or the like, can utilize services of a mobile radio network's operator or of various other providers via the mobile radio network, a security element of the end device, for example a SIM/ UICC card of the end device, must be personalized, i.e. equipped with subscription data which allow the security element to authenticate itself toward a selected mobile radio network.

For this purpose methods have been proposed wherein a personalization server of a mobile communication provider, on request, generates personalization data for a security element of an additional mobile end device (hereinafter also called "secondary mobile device") and supplies them to a first mobile end device, as a rule in encrypted form. The first mobile end device, also called "master mobile device", comprises a security element which already comprises a subscription for authentication toward the personalization server. The first mobile end device then relays the personalization data received from the personalization server to the additional mobile end device, where the personalization data are decrypted and stored or installed in the security element in a secure manner.

The object of the present invention is to further simplify such a personalization method, in particular with regard to the possibility of simply personalizing security elements of diverse and comparatively simply equipped end devices, such as so-called "smartwatches" or arbitrary electronic devices of the "Internet of Things" (IoT).

This object is achieved by the subject matter of the independent claims. Advantageous embodiments and developments are stated in the dependent claims.

The invention is based on the fundamental idea of transferring the personalization data while employing known, standardized application data objects. The application data objects of a Bluetooth profile may be used. The standardized application data object is misused for another purpose, the transfer of personalization data for another application. Thereby comparatively simple communication protocols, which are available on a multiplicity of end devices, are diverted from their intended purpose, to the effect that, for transport between the end devices, the personalization data are embedded into a data object which according to the employed communication protocol was not provided and arranged to transport personalization data for a security element originally, i.e. according to the standard defining the data object and the communication protocol.

A preferred embodiment of a method for incorporating personalization data into a security element of an additional mobile end device comprises the following steps:
Personalization data are supplied for the security element to a first end device by a personalization server, a communication connection is established between the first end device and an additional end device, the additional end device comprising the security element, and the personalization data are transferred from the first end device to the additional end device. For transferring the personalization data to the additional mobile end device, the personalization data are embedded into one or more standardized application data objects.

Usually, the first, preferably mobile, end device, which is also designated a "master mobile device", requests personalization data for the security element of the additional mobile end device (which is also designated a "secondary mobile device") from the personalization server of an operator of a mobile radio network. The first mobile end device is as a rule already registered with the personalization server, i.e. a security element of the first mobile end device already comprises a subscription of the corresponding operator of the mobile radio network. Via said subscription the first mobile end device can authenticate itself toward the personalization server.

The personalization server thereupon generates the requested personalization data for the security element of the additional end device or draws on corresponding personalization data already present, and supplies said personalization data to the first mobile end device. As a rule, said personalization data are encrypted in such a manner that they can only be decrypted by a personalization application in the security element of the additional mobile end device.

Then a preferably contactless communication connection is provided between the first mobile end device and the additional mobile end device, for example in the form of a Bluetooth® pairing. The communication connection can alternatively also be established for example via NFC or related protocols.

Finally, the personalization data intended for the security element of the additional mobile end device are transferred from the first mobile end device to the additional mobile end device.

For transferring the personalization data to the additional mobile end device, the personalization data are embedded into one or more standardized application data objects (of the same data object type), preferably by a personalization application installed in the first mobile end device. Such a data object is characterized in that it is provided and arranged, according to an application communication protocol, e.g. Bluetooth Profile, associated with the data object according to the standard or to a functionality associated with the data object according to the standard, to store information that is different from personalization data for a security element of a mobile end device.

In other words, the data object is diverted from its intended purpose or "misused" for transporting the personalization data.

Preferably, a standardized, conventional communication protocol is employed for transferring the personalization data embedded into the at least one data object from the first mobile end device to the additional mobile end device. Such a communication protocol is as a rule uniquely associated with the employed data object. Advantageously there is employed here a communication protocol that is supported by a vast majority of mobile end devices, that is, preferably a comparatively simple communication protocol. Therefore, the method can also be carried out for additional mobile end devices that are for example restricted for design reasons in terms of their possibilities of setting up data communication connections with other devices.

The communication protocol employed for transferring the personalization data is provided and arranged, according to the corresponding standard, for a functionality that is different from the personalization of a security element of a mobile end device.

In other words, the communication protocol employed for transferring the personalization data is also employed so as to be diverted from its intended purpose. The personalization data are in a way "tunneled" via the communication protocol from the first mobile end device to the additional mobile end device.

The personalization data are preferably embedded into the data object here such that the personalization data embedded into the data object are unrecognizable as such to the communication protocol. In particular, the data object still remains in complete agreement with the corresponding standard after the personalization data are embedded into the data object. The embedding of the personalization data into the data object therefore remains transparent or "invisible" to the communication protocol employed for transferring the personalization data, i.e. the protocol "does not notice" that it is being diverted from its intended purpose for transporting the personalization data.

According to a first preferred embodiment of the invention, there is employed as a communication protocol for transferring the personalization data embedded into the at least one data object from the first mobile end device to the additional mobile end device a Bluetooth® profile that is different from the "Bluetooth® SIM Access Profile" (Bluetooth® SAP). Bluetooth® SAP is currently employed in particular for connecting a mobile telephone of a vehicle to a SIM/UICC mobile radio card of a mobile end device, for example a smartphone. Due to the fact that most current smartphones do not support Bluetooth® SAP without elaborate modification, the employment of this protocol is practically impossible within the context of a method according to the invention.

According to a further preferred embodiment, there is employed for embedding the personalization data as a data object a so-called "phone book object" (PBO) according to the "Bluetooth® Phone Book Access Profile" (Bluetooth® BPAP). According to Bluetooth® BPAP, such a phone book object serves for storing a phone book entry, in particular a telephone number and information optionally connected therewith ("alpha tagging"). According to the invention, at least a portion of the personalization data to be transported can for example be embedded into a phone book object instead of alpha tagging.

Preferably, such a data object in the form of a phone book object into which personalization data have been embedded in the described manner is now for transferred while employing the Bluetooth® Phone Book Access Profile associated with the data object. This protocol, unlike Bluetooth® SAP, is supported by a multiplicity of mobile end devices and thus makes it possible for personalization data to be incorporated into the security element of the additional end device in a simple manner, and without the corresponding end devices having to be elaborately modified.

Alternatively, such a data object in the form of a Bluetooth® phone book object can also be transferred from the first mobile end device to the additional mobile end device in a different manner, however, for example by means of SyncML or employing AT commands. It is further possible that phone book objects are transferred between the two end devices via NFC or Wi-Fi, or that a bar code is scanned or corresponding data are inputted manually for incorporating phone book objects into the additional mobile end device.

According to a further preferred embodiment, there is employed as a data object that is diverted from its intended purpose for embedding the personalization data a "Metadata Attribute For Current Media Item" according to the "Bluetooth® Audio/Video Remote Control Profile" (Bluetooth® AVRCP). Such a data object is provided, according to the corresponding standard, to store metadata associated with an audio track or video track, such as the name of an artist, or the like.

Preferably, the stated communication protocol, i.e. the Bluetooth® AVRCP, is then employed for transferring corresponding data objects from the first mobile end device to the additional mobile end device.

It will be appreciated that alternative data objects and/or alternative communication protocols, in particular from the family of Bluetooth® profiles, can be employed within the context of the present invention for transferring corresponding personalization data embedded into data objects.

It will further be appreciated that in the case where a chosen data object merely allows the embedding of personalization data portions of a certain, pre-specified size, the personalization data can be broken down into different personalization data portions and be embedded into a plurality of corresponding data objects.

As mentioned hereinabove, the embedding of the personalization data into a corresponding data object is carried out as a rule by a personalization application which is executed on the first mobile end device. The personalization data are thereby embedded into the one or more data objects according to a pre-specified encoding such that a corresponding personalization application in the additional end device or in the security element of the additional end device can recognize those data objects into which personalization data are embedded according to the invention. Further, the encoding is such that the embedded personalization data can also be extracted from the data object or data objects and, where applicable, be reassembled so as to yield the original personalization data on the part of the personalization application in the additional mobile end device.

After the personalization data have been transferred from the first mobile end device to the additional mobile end device, embedded into the described data objects and while employing one of the described communication protocols so as to divert it from its intended purpose, personalization data are extracted there from the at least one data object. This can be done through a personalization application on the additional mobile end device or a personalization application in the security element of the additional mobile end device.

If necessary, the personalization data are then decrypted in the security element of the additional mobile end device and stored or installed in the security element of the additional mobile end device in a secure manner.

Preferably, the transferring of the personalization data from the first mobile end device to the additional mobile end device is initiated by the additional mobile end device.

According to a first preferred embodiment, there is employed for transferring the personalization data from the first mobile end device to the additional mobile end device a communication protocol according to which the at least one data object into which the personalization data are embedded is automatically retrieved from the first mobile end device at the prompting of the additional mobile end device. An example of such a communication protocol for automatically retrieving the corresponding data objects is the hereinabove described Bluetooth® PBAP, which is arranged to automatically update entries of a phone book.

According to a second preferred embodiment, there can also be employed for transferring the personalization data from the first mobile end device to the additional mobile end device a communication protocol according to which the additional mobile end device requests from the first mobile end device a transfer of the at least one data object into which personalization data are embedded, and the first mobile end device transmits the at least one data object to the additional end device in response to the request. An example of such a communication protocol is the hereinabove mentioned Bluetooth® AVRCP.

Alternatively, the first mobile end device can also trigger the transfer of the personalization data to the additional mobile end device, however.

A preferred embodiment of a mobile end device which can assume the role of the hereinabove mentioned first mobile end device is arranged to set up a preferably contactless communication connection with an additional mobile end device, for example via Bluetooth®. The mobile end device here comprises a first personalization application on the end-device side which is arranged to authenticate itself toward a personalization server by means of personalization data stored in a security element of the mobile end device, to request personalization data for a security element of the additional mobile end device from the personalization server, to embed personalization data received from the personalization server into one or more like-kind, standardized data objects of the kind described in detail hereinabove for the additional mobile end device according to a pre-specified encoding, and to supply the at least one data object for a transfer to the additional mobile end device.

A preferred embodiment of a security element according to the invention for a mobile end device is arranged to be integrated into the mobile end device firmly or removably. The security element can be configured here for example as a conventional SIM/UICC mobile radio card. Alternatively, the security element can also be present firmly integrated in the end device as an embedded-SIM/ UICC.

The security element comprises a personalization application on the security-element side which is arranged to receive personalization data provided for the security element from the end device or from a further mobile end device in communication with the security element, to decrypt them, where applicable, and to store or install them in the security element in a secure manner.

A mobile end device which can play the role of the additional mobile end device described hereinabove with reference to the method comprises a hereinabove described security element and, where applicable, an additional personalization application on the end-device side. Said additional personalization application is arranged to extract personalization data provided for the security element from at least one data object retrieved or received from a further end device in communication with the end device, which plays the role of the first mobile end device according to the method, and to relay them to the security element or the security-element-side personalization application of the security element.

However, the functionality for extracting the personalization data embedded into the at least one data object can alternatively also be supplied by the personalization application in the security element of the end device.

A preferred embodiment of a system according to the invention comprises a personalization server, at least a first mobile end device and an additional mobile end device of the hereinabove described kind, which are respectively arranged to carry out a method according to the invention.

The present invention will be described hereinafter by way of example with reference to the attached drawings. Therein are shown:
- Figure 1: Components of a preferred embodiment of a system according to the invention, and
- Figure 2: Steps of a preferred embodiment of a method according to the invention.

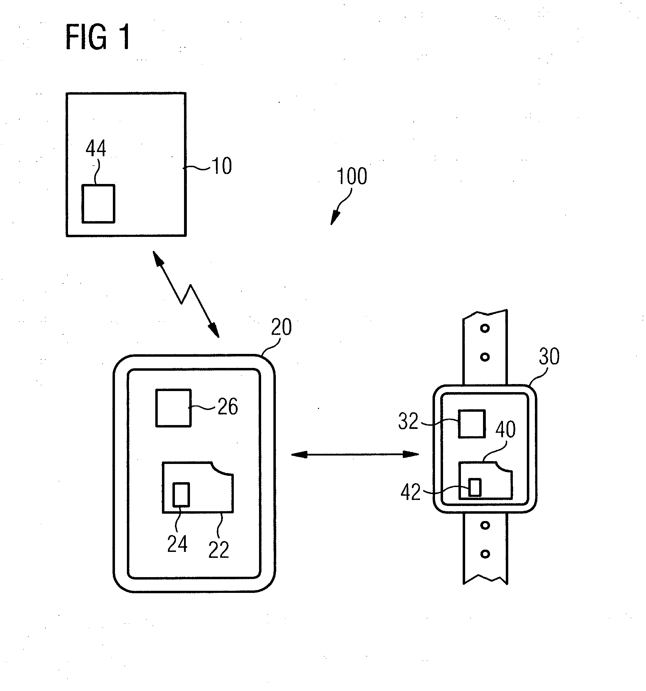

A system 100 schematically shown in Figure 1 for personalizing a security element 40 of an additional mobile end device 30 comprises a personalization server 10, a mobile end device 20 and the aforementioned additional mobile end device 30.

The first mobile end device 20 and the additional mobile end device 30 are arranged to set up a preferably contactless data communication connection, e.g. via Bluetooth®.

The first mobile end device 20 comprises a security element 22, for example a SIM/ UICC mobile radio card, which comprises a subscription 24 by means of which the first mobile end device 20 can authenticate itself toward the personalization server 10. In the first mobile end device 20 there is further executably stored a first personalization application 26 which, in the hereinafter described manner, supports a method for incorporating personalization data into the security element 40 of the additional mobile end device 30.

The first mobile end device 20 can be configured for example as a smartphone, tablet computer, notebook, or the like. Hereinafter the first mobile end device 20 will also be designated a "master mobile device".

The additional mobile end device 30, which is represented in Figure 1 in the form of a so-called "smartwatch" by way of example, comprises a security element 40. Said security element 40 can also be present as a conventional SIM/UICC mobile radio card or as a security element integrated firmly into the end device 30, for example in the form of an embedded-SIM/ UICC.

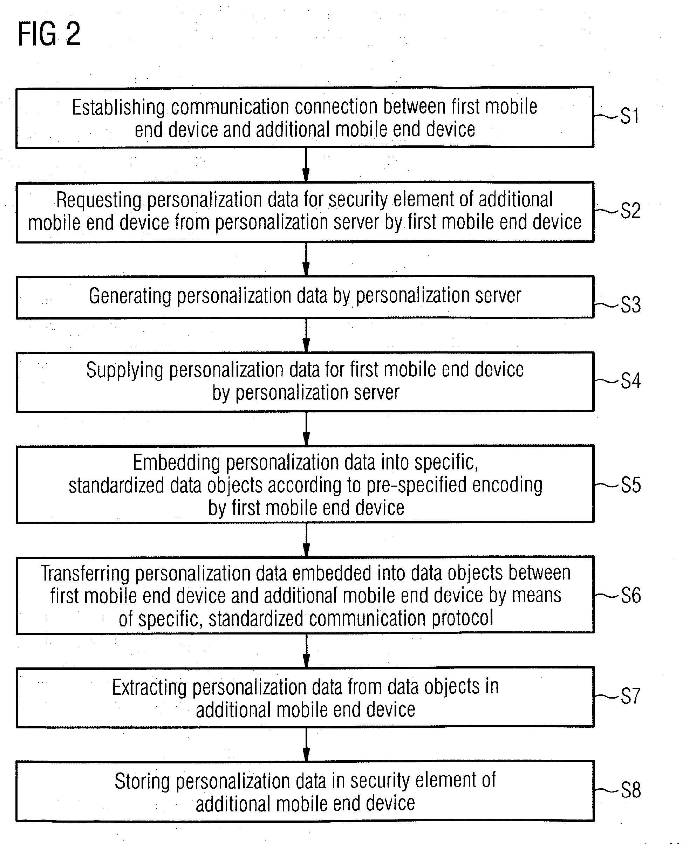

In the security element 40 there is stored a personalization application 42 whose functionality will be described more precisely hereinafter with reference to Figure 2. In the end device 30 there can further be executably stored an additional personalization application 32 on the end-device side which can support portions of the hereinafter described personalization process.

The additional mobile end device 30 can be configured in different ways and constitute for example a further smartphone, an additional device coupleable to a smartphone, or an arbitrary electronic device from the field of the "Internet of Things".

In a method for incorporating personalization data into a security element 40 of an additional mobile end device 30, which will be described by way of example hereinafter with reference to Fig. 2, the personalization application 26 of the first mobile end device 20 can be started in a first, preparatory step (not shown). Further, in this step the security element 40 can be incorporated with the personalization application 42 into the additional mobile end device 30 and, if present, the personalization application 32 of the additional mobile end device 30 be started. The personalization applications 26 and 32 can thereby be installed in the respective end devices 20, 30 in the conventionally known manner. This requires no extensive modification of the end devices 10, 30.

In the following step S1 a communication connection is then established between the first mobile end device 20 and the additional mobile end device 30. As mentioned hereinabove, this is preferably effected by means of a Bluetooth® pairing according to a Bluetooth® profile stated hereinafter by way of example. The Bluetooth profile uses application data objects, such as multimedia data, and will be misused for personalization data of another, independent application.

In step S2 the personalization application 26 of the first mobile end device requests personalization data 44 for the security element 40 of the additional mobile end device 30 from the personalization server 10.

Corresponding personalization data 44 can be generated by the personalization server 10, as indicated with reference to the optional step S3. Alternatively, the personalization server 10 can also draw on personalization data 44 for the security element 40 that are already present or supplied in a different manner.

In step S4 the personalization server 10 supplies the personalization data 44 for the security element of the additional mobile end device 30 to the personalization application 26 of the mobile end device 20.

The personalization application 26 of the first mobile end device 20 now in step S5 embeds the obtained personalization data for the security element 40 of the additional mobile end device 30 into a specific data object according to a pre-specified encoding, in a manner described hereinafter in detail.

A data object employed for embedding the personalization data 44 is characterized here in that it is a standardized data object which is provided and arranged, according to a communication protocol associated with the data object or with reference to a functionality associated with the data object according to the standard, to store information that is different from personalization data for a security element of a mobile end device. In other words, the data object is employed so as to be diverted from its intended purpose when personalization data are embedded therein.

In step S6 the one or more data objects into which personalization data have been embedded in step S5 are transferred from the first mobile end device 20 to the additional mobile end device 30 according to a standardized communication protocol associated with the data object, said protocol being provided and arranged, according to the corresponding standard, for a functionality that is different from the personalization of a security element of a mobile end device. Hereinafter two preferred embodiments of steps S5 and S6 will be described in detail with reference to concrete data objects and concrete communication protocols.

In step S7 the additional personalization application 32 on the additional mobile end device 30 extracts the personalization data 44 embedded into the one or more data objects and relays the extracted personalization data 44 to the personalization application 42 on the security element 40. Alternatively, the step of extracting the personalization data 44 from the data objects can also be carried out through the personalization application 42 itself.

If necessary, that is, if the personalization server 10 has supplied the personalization data 44 in an encrypted manner in step S4, the personalization application 42 decrypts the personalization data 44 accordingly and finally stores or installs them in the security element 40 in a secure manner in step S8.

In a final step, not shown in Figure 2, a process can now be triggered in which the personalization application 42 of the security element 40 of the additional end device 30 sets up a direct communication with the personalization server 10 in order to complete a loading and installing of the subscription to which the personalization data 44 belong.

Finally, preferred embodiments of individual steps of the method generally described hereinabove will be described in detail.

According to a first preferred embodiment, in the case where the master mobile device 20 and the secondary mobile device 30 both support Bluetooth® PBAP, a phone book object is used in order to embed or encapsulate personalization data 44:
In step S5, the personalization application 26 in the master mobile device 20 writes encrypted subscription data 44 into the phone book of the master mobile device 20 using a special notation (for details, see hereinbelow).

In general, mobile device phone books support multiple phone-number types such as work, home, cell, other, etc. But in order to ensure full compatibility with SIM phone book ADN entries, only corresponding phone-number types are preferably used in the context of the present invention.

To automatically download personalization data 44 from the master mobile device 20 (step S6), the secondary mobile device 30 searches the Service Discovery Profile (SDP) record on the paired master mobile device 20 to determine whether the master mobile device 20 supports Bluetooth® PBAP. If the master mobile device 20 supports Bluetooth® PBAP, the secondary mobile device 30 assumes the Phone Book Client Equipment (PCE) role according to Bluetooth® PBAP and uses elements from the Infrared Mobile Communications (IrMC) protocol over the Object Exchange Protocol (OBEX) to retrieve vCards through a Bluetooth® connection.

If the master mobile device 20 does not support Bluetooth® PBAP, the secondary mobile device 30 can use other methods of downloading a phone book. The secondary mobile device can e.g. try using SyncML, or use an AT command-based phone book download.

Each vCard contains information about contacts in a phone book, and each contact is an encrypted fragment of the personalization data 44 to be transferred to the secondary mobile device 30. The personalization application 42 in the security element 40 of the secondary mobile device 30 can merge the entries together as soon as the full personalization data 44 are retrieved from the master mobile device 20.

When Bluetooth® PBAP is activated, the secondary mobile device 30 reads the encrypted personalization data 44 and writes the personalization data 44 into the phone book of the security element 40 of the secondary mobile device 30.

Bluetooth® Phone Book Access Profile (PBAP) in some PCE ("Phone Book Client Equipment", the role of the secondary device 30 in the context of PBAP) supports automatic download, this enables a download of the complete contents of a phone book automatically when the master mobile device 20 (acting as the PSE ("Phone Book Server Equipment", the role of the master mobile device 20 in PBAP)) is first connected to the PCE.

Otherwise, the secondary mobile device 30 can perform a selective, filtered download based on the special notation of the phone book object.

The personalization application 42 on the security element 40 monitors the file change in the phone book of the security element 40 (e.g. EF-ADN file) and, upon encountering and verifying the special notation, retrieves, decrypts and installs the personalization data 44 in the security element 40 (step S8).

At the end of the profile loading process, the secondary mobile device 30 will be triggered to switch to the new subscription in the security element 40, based on the personalization data 44 installed in step S8. On successful network registration and notification, the personalization server 10 finalizes the loading process, e.g. performs a full profile download to the security element 40. Master mobile device 20 and secondary device 30 can also perform a clean-up of their respective phone books.

Embedding or encapsulating personalization data 44 into phone book objects can be done as follows:
In a SIM card, the EF-ADN (Abbreviated Dialing Numbers) file contains Abbreviated Dialing Numbers (ADN) and/ or Supplementary Service Control strings (SSC). In addition it contains identifiers of associated network/bearer capabilities and identifiers of extension records. It may also contain associated alpha tagging.

Each entry consists of a dialing number and an alpha identifier. The alpha tagging shall use either:
- the SMS default 7 bit coded alphabet as defined in TS 23.038 with bit 8 set to 0. The alpha identifier shall be left justified. Unused bytes shall be set to 'FF'.
- or one of the UCS2 coded options as defined in the annex of TS 31.101.

An example using unencrypted subscription data for illustration looks as follows:

| | |
|---|---|
| Dialing number | = 20 digits (0-9) |
| Alpha identifier | = 14 alpha characters (0-9, a-z, A-Z, etc) |

It may be assumed that the personalization data 44 consist of IMSI and KI in the form:
- IMSI: = C1 C2 C3 C4 C5 C6 C7 C8 C9, and
- KI: = E1 E2 E3 E4 E5 E6 E7 E8 E9 EA EB EC ED EE EF E0
(in concatenated form: IMSI + KI = C1 C2 C3 C4 C5 C6 C7 C8 C9 E1 E2 E3 E4 E5 E6 E7 E8 E9 EA EB EC ED EE EF E0)

It may further be assumed that only the alpha identifier is used to transfer personalization data (using a three-byte prefix as the identifier "SMX" where X is the consecutive number). The respective AND alpha identifiers of five data objects in the form of phone book objects according to Bluetooth® PBAP might look as follows (the concatenated string representing the personalization data 44 has been subdivided into five portions, namely C1C2C3C4C5C, 6C7C8C9E1E2, E3E4E5E6E7E, 8E9EAEBECED, and EEEFE0, which have each been embedded into a separate phone book object):
1. ADN alpha identifier = SM1C1C2C3C4C5C
2. ADN alpha identifier = SM26C7C8C9E1E2
3. ADN alpha identifier = SM3E3E4E5E6E7E
4. ADN alpha identifier = SM48E9EAEBECED
5. ADN alpha identifier = SM5EEEFE0

According to a second preferred embodiment, in the case where both the master mobile device 20 and the secondary mobile device 30 support Bluetooth® AVRCP, steps S5 to S8 as generally described hereinabove with reference to Fig. 2 may be implemented as follows:
The personalization application 26 of the master mobile device 20 transfers the encrypted personalization data 44 into AVRCP metadata (step S5) using a special notation (see hereinbelow for details). To ensure highest compatibility, only frequently used, standard AVRCP media attributes of a suitable size are preferably used in the context of the present invention.

To download the personalization data 44 from the master mobile device 20, the secondary mobile device 30 makes one or more AVRCP media attribute requests (step S6, part 1).

The master mobile device 20 replies to the secondary mobile device 30 with the media attribute metadata (step S6, part 2).

Encrypted fragments of the personalization data 44 can be spread over one or more AVRCP media attributes from one or more media (e.g. multiple songs or video clips). The secondary mobile device 30 can merge the entries together as soon as the full personalization data 44 are retrieved from the master mobile device 20 (step S7).

The secondary mobile device 30 (i.e. the secondary personalization application 32) can then send the extracted personalization data 44 to the security element 40 (i.e. the personalization application 42 on the security element 40).

The personalization application 42 decrypts and installs the personalization data 44 in the security element 40.

At the end of the profile loading process, the secondary mobile device 30 will be triggered to switch to the new subscription in the security element 40, based on the just installed personalization data 44. On successful network registration and notification, the personalization server 10 finalizes the loading process, e.g. performs a full profile download to the security element 40. Embedding or encapsulating personalization data into AVRCP metadata may be done as follows:
ID3 is a metadata container most often used in conjunction with the MP3 audio file format. It allows information such as the title, artist, album, track number, and other information about the file to be stored in the file itself. ID3 is a de facto standard for metadata in MP3 files. MP4 also allows the embedding of an ID3 tag and this is widely supported.

There are two unrelated versions of ID3: ID3v1 and ID3v2. ID3v2 is structurally very different to ID3v1, consisting of an extensible set of "frames" located at the start of the file, each with a frame identifier (a three- or four-byte string) and one piece of data. There are 83 types of frames declared in the ID3v2.4.0 specification, and applications can also define their own types. There are standard frames for containing cover art, BPM, copyright and license, lyrics, and arbitrary text and URL data, among other things. To ensure support for as many AVRCP devices as possible, only standard frames of the lowest common denominator should be used in the context of the present invention in order to transport the personalization data, e.g. standard frames such as song title, artist name, and album name, etc.

ID3v2 tags are of variable size, and usually occur at the start of the file, to aid streaming media. They consist of a number of frames, each of which contains a piece of metadata. For example, the TIT2 frame contains the title, and the WOAR frame contains the URL of the artist's website. Frames can be up to 16 MB in length, while total tag size is limited to 256 MB. However, not all AVRCP devices can handle such data size. Hence the subscription data may need to be separated into smaller blocks and packed into multiple frames, or multiple media, e.g. a sequential 'playlist' of five short audio clips of approximately five seconds each.

Assuming the personalization data consist of
- IMSI: = C1 C2 C3 C4 C5 C6 C7 C8 C9
- KI: = E1 E2 E3 E4 E5 E6 E7 E8 E9 EA EB EC ED EE EF E0
(in concatenated form: IMSI + KI = C1 C2 C3 C4 C5 C6 C7 C8 C9 E1 E2 E3 E4 E5 E6 E7 E8 E9 EA EB EC ED EE EF E0)

Packed in ID3, the respective data object may look as follows:

| | |
|---|---|
| Title | C1C2C3C4C5C6C7C8C9E1E2E3E4E5E6E7E8E9EAEBECEDEEEFE0 |
| Artist | G&D |
| Album | Subscription Management |
| Track | 1/1 |
| Year | 2015 |
| Genre | Other |

The table hereinbelow provides the list of IDs for AVRCP media attributes. These IDs are used to uniquely identify media information. Additional information on media attributes is available in Bluetooth® Assigned Numbers.

| | |
|---|---|
| Title | Text field representing the title, song name or content description coded per specified character set. |
| Artist Name | Text field representing artist(s), performer(s) or group coded per specified character set. |
| Album Name | Text field representing the title of the recording (source) from which the audio in the file is taken |
| Track Number | Numeric ASCII string containing the order number of the audio-file on its original recording. |
| Total Number of Tracks | Numeric ASCII string containing the total number of tracks or elements on the original recording. |
| Genre | Text field representing the category of the composition characterized by a particular style. |
| Playing Time | Numeric ASCII string containing the length of the audio file in milliseconds (e.g. 02:30 =150000) |

Transported in AVRCP as one track, the picture is the following:

| | |
|---|---|
| Title | C1C2C3C4C5C6C7C8C9E1E2E3E4E5E6E7E8E9EAEBECEDEEE FE0 |
| Artist name | G&D |
| Album name | Subscription Management |
| Track Number | 1 |
| Total Number of Tracks | 1 |
| Genre | Other |
| Year | 2015 |

Transported in AVRCP as two tracks, it looks as follows:

| | |
|---|---|
| Title | C1C2C3C4C5C6C7C8C9E1E2 E3 |
| Artist name | G&D |
| Album name | Subscription Management |
| Track Number | 1 |
| Total Number of Tracks | 2 |
| Genre | Other |
| Year | 2015 |
| Title | E4E5E6E7E8E9EAEBECEDEEEFE0 |
| Artist name | G&D |
| Album name | Subscription Management |
| Track Number | 2 |
| Total Number of Tracks | 2 |
| Genre | Other |
| Year | 2015 |

The secondary device 30 can send responses such as confirmation and error codes to the master mobile device 20 by using a coded request or pattern of requests, e.g. asking the master mobile device 20 to 'Play' song 'Operation OK' from album 'Subscription Management AVRCP Coded Response' three times in succession to indicate the operation was successful, etc.

### Example of specific message:

| | |
|---|---|
| Title | Operation OK |
| Artist name | G&D |
| Album name | Subscription Management AVRCP Coded Response |
| Track Number | 1 |
| Total Number of Tracks | 10 |
| Genre | Other |
| Year | 2015 |

If binary data need to be sent from the security element 40 in the secondary mobile device 30 to the master mobile device 20, the secondary mobile device 30 can transmit the information by selecting the corresponding hexadecimal values or the equivalent. For example, the secondary mobile device 30 asks the master mobile device 20 to 'Play' song 'Hex F' from album 'Subscription Management AVRCP Coded Response' to indicate the operation was successful, etc. In this case, each song represents one hexadecimal value, 0-9 and A-F. So sixteen tracks are needed.

Example of data message: 1 Hexadecimal value, 'F' (decimal 15). Sixteen tracks needed for full range.

| | |
|---|---|
| Title | Hex F |
| Artist name | G&D |
| Album name | Subscription Management AVRCP Coded Response |
| Track Number | 16 |
| Total Number of Tracks | 16 |
| Genre | Other |
| Year | 2015 |

To send a one-byte value of 'FE' (decimal 254):
1. SD requests MD to 'Play' song 'Hex F' from album 'Subscription Management AVRCP Coded Response'
2. SD requests MD to 'Play' song 'Hex E' from album 'Subscription Management AVRCP Coded Response'

## Claims

1. A method for incorporating personalization data (44) into a security element (40), comprising the steps of:
- supplying personalization data (44) for the security element (40) to a first end device (20) by a personalization server (10);
- establishing (S1) a communication connection between the first end device (20) and an additional end device (30), the additional end device (20) comprising the security element (40), and
- transferring (S6) the personalization data (44) from the first end device (20) to the additional end device (30),
**characterized in that**
the personalization data (44), for transfer to the additional end device (30), are embedded (S5) into one or more standardized application data object(s).

2. The method according to claim 1, **characterized in that** the standard is a Bluetooth profile.

3. The method according to claim 1 or 2, **characterized in that** for transferring the personalization data (44) embedded into the at least one data object from the first mobile end device (20) to the additional mobile end device (30) there is employed a standardized communication protocol which is provided and arranged, according to the corresponding standard, for a functionality that is different from the personalization of a security element of a mobile end device.

4. The method according to one of the preceding claims, **characterized in that** the personalization data (44) are embedded into the data object such that the personalization data (44) embedded into the data object are unrecognizable as such to the application communication protocol.

5. The method according to one of the preceding claims, **characterized by** the further steps of:
- extracting (S7) the personalization data (44) from the at least one data object in the additional mobile end device (30); and
- storing (S8) the personalization data (44) in the security element (40) of the additional mobile end device (30).

6. The method according to one of the preceding claims, **characterized in that** for transferring the personalization data (44) from the first mobile end device (20) to the additional mobile end device (30) there is employed a communication protocol according to which the at least one data object into which the personalization data (44) are embedded is automatically retrieved from the first mobile end device (20) at the prompting of the additional mobile end device (30).

7. The method according to one of the preceding claims, **characterized in that** for transferring the personalization data (44) from the first mobile end device (20) to the additional mobile end device (30) there is employed a communication protocol according to which the additional mobile end device (30) requests from the first mobile end device (20) a transfer of the at least one data object into which the personalization data (44) are embedded, and the first mobile end device (20) transmits the at least one data object to the additional end device (30) in response to the request.

8. The method according to one of the preceding claims, **characterized in that** there is employed as a communication protocol for transferring the personalization data (44) embedded into the at least one data object from the first mobile end device (20) to the additional mobile end device (30) a Bluetooth® profile that is different from the "Bluetooth® SIM Access Profile" (Bluetooth® SAP).

9. The method according to one of the preceding claims, **characterized in that** there is employed as a data object for embedding the personalization data (44) a "phone book object" according to the "Bluetooth® Phone Book Access Profile" (Bluetooth® PBAP).

10. The method according to claim 9, **characterized in that** there is employed as a communication protocol for transferring the personalization data (44) embedded into the at least one data object from the first mobile end device (20) to the additional mobile end device (30) the "Bluetooth® Phone Book Access Profile".

11. The method according to any of claims 1 to 8, **characterized in that** there is employed as a data object for embedding the personalization data (44) a "Metadata Attribute For Current Media Item" according to the "Bluetooth® Audio/Video Remote Control Profile" (Bluetooth® AVRCP).

12. The method according to claim 11, **characterized in that** there is employed as a communication protocol for transferring the personalization data (44) embedded into the at least one data object from the first mobile end device (20) to the additional mobile end device (30) the "Bluetooth® Audio/Video Remote Control Profile".

13. A mobile end device (20) which is arranged to set up a communication connection with an additional mobile end device (30), with the mobile end device (20) comprising a first personalization application (26) on the end-device side which is arranged to
- request personalization data (44) for a security element (40) of the additional mobile end device (30) from a personalization server (10),
- embed personalization data (44) received from the personalization server (10) into one or more, standardized application data object according to a pre-specified encoding, and
- supply the at least one data object for a transfer to the additional mobile end device (30).

14. A security element (40) for a mobile end device (30) which is arranged to be integrated into the mobile end device (30) firmly or removably, comprising a personalization application (42) on the security-element side which is arranged to receive personalization data provided for the security element (40) hidden in a standardized application data object and to store them in the security element (40) in a secure manner.

15. A mobile end device (30) having a security element (40) according to claim 14, comprising an additional personalization application (32) on the end-device side which is arranged to extract personalization data (44) provided for the security element (40) from at least one data object retrieved or received from a further end device (20) according to claim 13 in communication with the mobile end device (30), and to relay them to the security element (40).

16. A system (100), comprising a personalization server (10), a first mobile end device (20) according to claim 12, and an additional mobile end device (30) according to claim 15, which are respectively arranged to carry out a method according to any of claims 1 to 11.
